# EUROPEAN PATENT APPLICATION

(11) **EP 3 767 320 A1**
(43) Date of publication of application: **20.01.2021**
(21) Application number: 20186657.1
(22) Date of filing: 20.07.2020
(51) Int. Cl.: G01S 5/02, G01S 5/00

(54) **LOCALIZATION APPARATUS**

(30) Priority: 18.07.2019 IT 201900012303
(71) Applicant: Telecare H24 S.r.l., 20148 Milano (IT)
(72) Inventor: POGGI, Roberto, 20148 Milano (IT); SUPERTI, Fabio, 20148 Milano (IT)
(74) Representative: Branca, Emanuela

(57) **Abstract**

Localization apparatus (100) comprising at least a portable electronic device (10) adapted to be applied to an object or to a person, at least three gateway electronic devices (20, 30) arranged fixedly at an inner or an outer space, connected in communication between them and with said at least one portable electronic device (10), at least a server (40) comprising at least an electronic device comprising at least a processor (104) which processes data and comprises a module which measures time intervals between events, data or signals and at least a memory (105) which stores data at least for a period of time necessary to receive them or transmit them or process them by said at least a processor (104), wherein said at least a portable electronic device (10) comprises a microcontroller (101) that processes data and comprises a module that measures time intervals between events, data or signals, at least one first memory (102) of said at least a memory (102, 105), at least a portable supply battery (111) which electrically supplies electronic components mounted with said at least a portable electronic device (10), wherein said at least a gateway electronic device (20, 30) comprises another microcontroller (101) that processes data and comprises a module which measures time intervals between events, data or signals, at least another memory (102) of said at least a memory (102, 105), at least another supply battery (112) which electrically supplies electronic components mounted with said at least a gateway electronic device (20, 30), wherein a spatial position of each of said at least three gateway electronic devices (20, 30) is stored in said at least a memory (105) of said server (40) and/or stored in said at least another memory (102) of at least one of said at least three gateway electronic devices (20, 30), wherein said at least a processor (104) of said at least a server (40) calculates at least a distance between each of said at least three gateway electronic devices (20, 30) and said at least a portable electronic device (10) and calculates a spatial position of said at least a portable electronic device (10) using as calculation data the spatial position of each of said at least three gateway electronic devices (20, 30) and at least three distances between said at least a portable electronic device (10) and said at least three gateway electronic devices (20, 30) .

## Description

The present invention relates to a localization apparatus.

In the state of the art localization apparatuses comprising at least one electronic module connected to one or more global navigation satellite systems such as for example GNSS or GPS are known. Known localization apparatuses receive a spatial position on the earth's surface.

Disadvantageously, the known localization apparatuses cannot precisely identify the position of an object or a person when they are used inside buildings or inside facilities.

Disadvantageously, the known localization apparatuses used in a multi-storey building do not allow to localize the floor where the object or person is positioned.

Known localization apparatuses are used in a social care facility or in a hospital facility where inpatients suffering from Alzheimer's disease or other mental disorders get easily lost in the facility or in the outer space. Disadvantageously it is difficult to identify the position of said inpatients because they do not accept or forget to wear electronic devices that can communicate their position.

Known localization apparatuses used for inpatients comprise wearable devices comprising phone cards comprising a subscriber's identity electronic modules (SIM) connected to a network of a global system for mobile communications (GSM) and electronic geolocation modules connected to one or more global navigation satellite systems. Disadvantageously it is easy to get rid of said wearable devices and they disadvantageously suffer from a strong limitation in terms of the autonomy of the SIM battery and the GNSS module, disadvantageously also suffering from strong limits on a possible reduction in the size of the wearable device.

Disadvantageously, the inpatient who wears the wearable device can be localized only if he goes outside a building and for a relatively short period of time before the supply batteries get discharged.

The purpose of the present invention consists in the fact of realizing a localization apparatus that allows to localize objects or people both inside a building, localizing a floor of the building, and in an outer space, which allows operation for a long period of time without the batteries getting discharged.

According to the invention, this object is achieved with a localization apparatus according to claim 1.

Other features are envisaged in the dependent claims.

The features and advantages of the present invention will be more apparent from the following description, which is to be understood as exemplifying and not limiting, with reference to the appended schematic drawings, wherein:

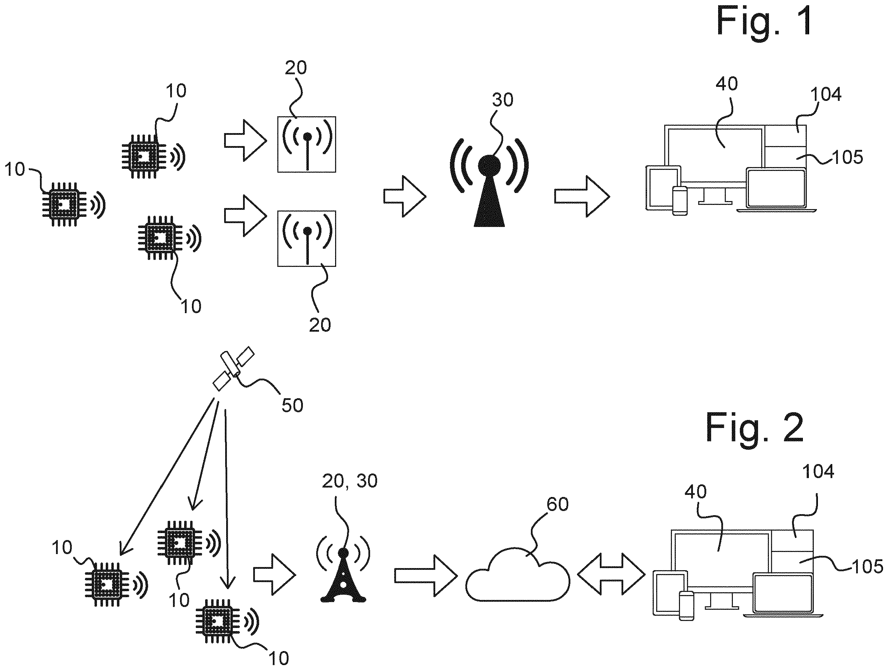

figure 1 shows an operating diagram of a localization apparatus inside a building or facility, where the localization apparatus according to the present invention comprising a multiplicity of portable electronic devices fixed on objects or people, gateway electronic devices, one of which is a master, connected between them and with portable electronic devices and a server connected at least to a master gateway electronic device, where the server can comprise a multiplicity of connected electronic monitoring devices such as, for example, computers, notebooks, PDAs or mobile phones;
figure 2 shows an operating diagram of the localization apparatus in an outer space, where portable electronic devices receive information on their position from a global navigation satellite system and where at least one master gateway electronic device communicates with a computer network connected to the server;

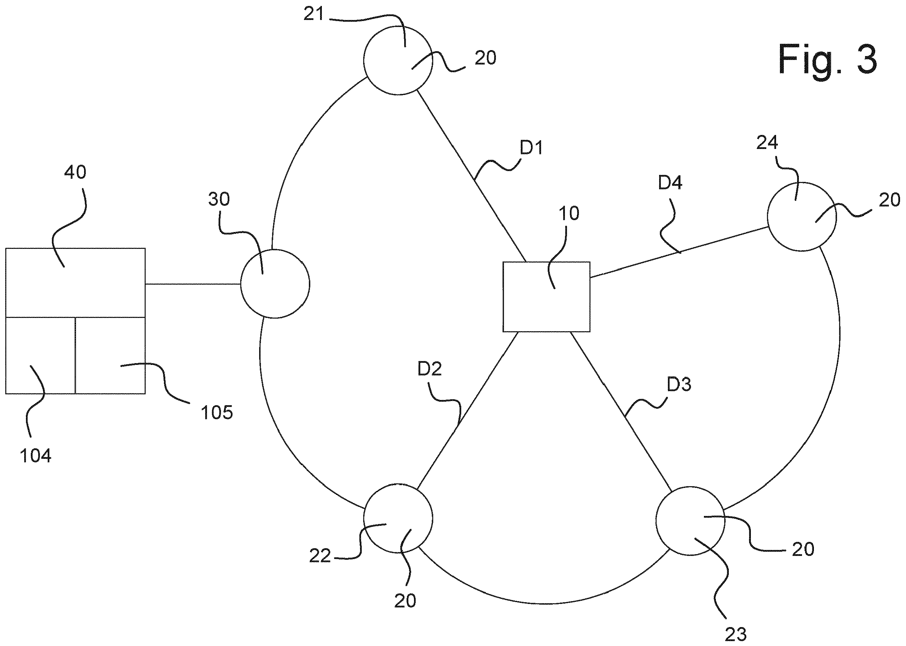

figure 3 shows an operating diagram of the localization apparatus in a space inside the building or facility;

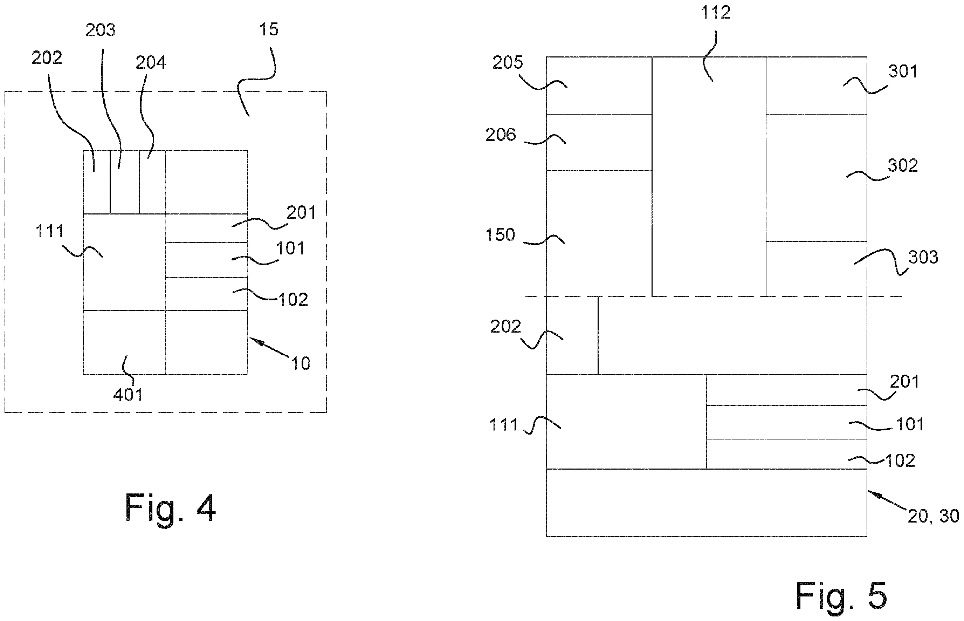

figure 4 shows a diagram of the portable electronic device of the localization apparatus;
figure 5 shows a diagram of the gateway electronic device of the localization apparatus.

With reference to the aforementioned figures, a localization apparatus 100 for things or for people either inside a building or a facility or in the outer space is shown. Facility means, for example, a goods warehouse, a railway or bus station, an airport or a freight transport ship.

The localization apparatus 100 according to the present invention comprising a multiplicity of portable electronic devices 10 fixed on objects or people, gateway electronic devices 20, of which at least one is a master gateway electronic device 30, connected between them and to the portable electronic devices 10 and a server 40 connected at least to the master gateway electronic device 30. The server 40 can comprise a multiplicity of electronic monitoring devices connected to the server 40 such as for example computers, notebooks, PDAs or cell phones, where each electronic monitoring device comprises at least a processor 104 and at least a memory 105.

The processor 104 is a microprocessor which comprises a clock chip for measuring time intervals between events or signals.

In this embodiment, a localization apparatus 100 is described in particular for inpatients suffering from Alzheimer's disease or other mental disorders inside a social healthcare facility with spaces inside multi-storey buildings and external spaces among buildings, but the localization apparatus 100 can also be used for objects arranged inside or outside a building such as for example a warehouse or a mobile facility, such as containers arranged in a freight transport ship.

Each portable electronic device 10 of the multiplicity of portable devices 10 comprises a portable supply battery 111, a microcontroller 101 (MCU, acronym for *Micro Controller Unit*), a memory 102, four antennas 201-204 and an acceleration sensor 401.

The portable supply battery 111 is preferably a flat-shaped battery of the type 2430 or 2450 for reducing
the size of the portable device 10 so that it can be advantageously worn without discomfort even by inpatients.

The microcontroller 101 advantageously allows to dissipate less power and to use less electric current of the portable supply battery 111 compared to a microprocessor.

The microcontroller 101 comprises a clock chip for measuring time intervals between events or signals.

The memory 102 allows to store data at least for a period of time necessary to receive them or transmit them or process them by the microcontroller 101.

A first antenna 201 of the four antennas is an omnidirectional, ceramic chip radio frequency transceiver antenna with 2.4 GHz frequency so as to receive and transmit in any direction and to operate at low power so as to be advantageously wearable by inpatients without interfering with other electromedical devices with which the inpatients might be equipped. The operation at low power dissipated by the first antenna 201 also advantageously allows to consume little electrical current of the portable supply battery 111.

A second antenna 202 of the four antennas is a low-power and high transmission amplitude transceiver antenna (LP-WAN, acronym for *Low Power Wide Area Network*). The second antenna 202 is of the type that uses a LoRa transmission protocol (acronym for *Long Range*). Advantageously, the low dissipation power allows to consume less current than the portable supply battery 111.

LoRa is a point-to-point wireless communication protocol that uses commercially free radio frequency bands.

The LoRa protocol advantageously allows to obtain a wireless network of reduced consumption of the portable supply battery 111 of the portable electronic devices 10, with a wide spatial range, bidirectional, safe, with a minimal, inexpensive infrastructure that does not require any SIM of a phone provider, uses sub-gigahertz radio frequency bands such as 169 MHz, 433 MHz, 868 MHz for Europe and 915 MHz for North America.

LoRa allows long range transmissions of over 10 km in rural areas with low energy consumption.

A third antenna 203 of the four antennas 201-204 is a satellite antenna which receives the satellite signal of at least one of the global navigation satellite systems 50 such as GNSS or GPS.

In a space outside the building or facility, the portable electronic device 10 identifies its own position by receiving the satellite signal and communicates the position datum on the earth's surface via the first 201 or the second antenna 202 to at least one gateway electronic device 20, 30.

A fourth antenna 204 of the four antennas 201-204 is another low-dissipated power and wide receiving and transmission LP-WAN range. The fourth antenna 204 uses a proprietary Sigfox® branded protocol which has the technical characteristic of receiving and transmitting in frequencies of an ISM band, an acronym for industrial, scientific and medical radio frequency bands. The fourth antenna 204 uses an extremely narrow frequency band suitable for crossing even macroscopic objects, a so-called *Ultra Narrow Band* as per technical terminology.

The acceleration sensor 401 measures the acceleration undergone by the portable electronic device 10 and communicates it to the memory 102. The micro controller 101 reads the acceleration datum from the memory 102 and communicates it via the first 201 or the second antenna 202 to at least one gateway electronic device 20, 30 which in turn communicates the datum to another gateway device 20 or to the master gateway device 30 until the datum reaches the server 40 so that it is stored in memory 105, where there is an acceleration threshold and a time period threshold. The processor 104 verifies that the acceleration datum measured by the acceleration sensor 401 is above the threshold present in memory 105. If the measured acceleration datum is above the threshold, then the processor 104 measures a period of stopping time within which the portable electronic device 10 does not move from the last recorded position when the acceleration event above the threshold occurred. If the period of stopping time is greater than the time period threshold preset in the memory 105, then the processor 104 communicates an event of the inpatient possibly falling so that workers in charge of monitoring the inpatients can check the inpatient's health.

Advantageously, the stopping time threshold value and the acceleration threshold value allow the localization apparatus 100 to avoid alarming the healthcare workers when the inpatient rather sits down and despite falling down, gets up and continues to walk.

The gateway 20 or master 30 electronic device mounts the first 201 and the second antenna 202, the microcontroller 101 and the memory 102.

The gateway electronic device 20, 30 can also mount the acceleration sensor 401, the third 203 and the fourth antenna 204 and the portable supply battery 111, but there is no need for the gateway electronic device 20, 30 to be equipped with said electronic components 401, 203, 204, 111.

Alternatively, for easier modularity of the components, the gateway 20 and the master 30 electronic device can provide for the same electronic components as the portable electronic device 10, even the unnecessary electronic components.

Going back to the main embodiment, the gateway electronic device 20, 30 in addition to the electronic components of the portable electronic device 10 which are deemed necessary and comprise the first 201 and the second antenna 202, the microcontroller 101 and the memory 102, also comprises an additional module 150 which comprises a supply battery 112 supplied through a portable power supply or through an electric current network, a fifth antenna 205, a sixth antenna 206 and at least one data connector 301-303.

The supply battery 112 also supplies the electrical components 101, 102, 201, 202 which in the portable electronic device 10 are instead supplied by the portable supply battery 111.

The fifth antenna 205 is a very high frequency omnidirectional J-pole LoRa antenna (VHF, acronym for *Very High Frequency*) which receives and transmits wide range signals in all directions.

The fifth antenna 205 is used to receive and transmit signal and data with the second antenna 202 of the portable electronic devices 10 and with the second antenna 202 of other gateway electronic devices 20, 30.

The sixth antenna 206 is an omnidirectional J-pole antenna with router functions. The sixth antenna 206 is used to receive and transmit signal and data with the first antenna 201 of the portable electronic devices 10 and with the first antenna 201 of other gateway electronic devices 20, 30.

Alternatively, the sixth antenna 206 uses a proprietary high power Sigfox® branded protocol suitable for connection to the Internet network.

Alternatively, the master gateway electronic device 30 also comprises a portable phone card comprising a SIM module for phone transmission of data and signals via GSM mobile telephony or via cloud 60 to the server 40.

Going back to the main embodiment of the localization apparatus 100, the gateway electronic device 20, 30 comprises the at least one data connector 301-303.

A first data connector 301 is a serial port, a second data connector 302 is a USB port, an acronym for *Universal Serial Bus* and a third data connector 303 which is a coaxial connector, preferably an SMA jack, an acronym for *SubMminiature version A.*

These data connectors 301-303 advantageously allow the gateway electronic device 20, 30 to be connected to the server 40 or to other control units which comprise at least processor 104 and memory 105.

The multiplicity of gateway electronic devices 20, 30 is distributed inside the building or facility. Each gateway electronic device 20, 30 is fixed to a wall, ceiling or floor of the building or facility.

A wireless network of the localization apparatus 100 provides for the portable electronic device 10 to be arranged inside a pocket 15 of a plaster which is applied over a back between the shoulder blades of the inpatient, the gateway 20 and master 30 electronic devices are instead arranged in fixed positions inside the building or facility. Each gateway 20 and master 30 electronic device communicates with the other gateway 20 electronic devices and with the portable electronic devices 10 by means of the antennas 201-206.

At least one master electronic device 30, although there is the possibility that they are also gateway electronic devices 20, communicates with the server 40.

The electronic components 101, 102, 201-204, 401 of the portable electronic devices 10 require little energy, most of them can operate for more than ten years with a single portable supply battery 111.

The wireless network of the localization apparatus 100 works with AES128 keys which make the interception or tampering of communications between the electronic devices 10-30 practically impossible.

In addition, all the electronic devices 10-30 are designed to comply with worldwide specifications such as FCC, ETSI and ARIB and comply with widely accepted standards such as IEEE 802.15.4g and WMBus.

Inside the building or facility, the portable electronic device 10 communicates a presence signal by means of the first 201 or the second low-power antenna 202 with a multiplicity of gateway electronic devices 20, 30.

Its spatial position with respect to the building or facility is recorded in the memory 102 of the gateway electronic device 20, 30. The spatial position of other gateway electronic devices 20, 30 is also expected to be recorded.

Each gateway electronic device 20, 30 which receives via a fifth 205 or sixth antenna 206 the presence signal from the portable electronic device 10 in turn sends a forward signal to the portable electronic device 10 which in turn, as soon as the portable electronic device 10 receives the forward signal, emits a return signal.

The microcontroller 101 of the gateway electronic device 20, 30 starts a count of a period of time from the departure of the forward signal to the reception of the return signal which is a flight time.

The microcontroller 101 of the gateway electronic device 20, 30 measures the flight time between the gateway electronic device 20, 30 and the portable electronic device 10 and sends the datum to the processor 104 of the server 40 which calculates a distance between the portable electronic device 10 and the gateway electronic device 20, 30.

At least two other gateway electronic devices 20, 30 must measure their own distance from the portable electronic device 10 so that a triangulation calculation can be made between at least three gateway electronic devices 20, 30 and the portable electronic device 10 and to be able to define the position of the portable electronic device 10.

The triangulation calculation and the definition of the position of the portable electronic device 10 with respect to at least three gateway electronic devices 20, 30 is made by the processor 104 of at least one of the devices of the server 40.

In fact, at least three gateway electronic devices 20, 30 transmit the datum of the distance detected by the portable electronic device 10 towards the master gateway device 30, or between them 20 up to reaching the master gateway device 30. The master gateway device 30 communicates this distance datum to the memory 105 of the server 40. The processor 104 of the server 40 reads the distance data collected in the memory 105 and processes this data by calculating the triangulation and, knowing the position of all the gateway electronic devices 20, 30, which is recorded in the memory 105, the processor 104 calculates the spatial position of the portable electronic device 10 in space.

Alternatively, the wearable portable electronic device 10 when it is inside the facility communicates with the gateway 20 or master 30 electronic devices only by means of the second antenna 202 using the low frequency LoRa protocol.

In this alternative, the gateway electronic devices 20 communicate between them and with the master 30 through the fifth antenna 205 using the high frequency LoRa protocol.

In this alternative, the master gateway electronic device 30 is the only one that has the connection to the server 40 via GSM module with relative SIM card and the master gateway electronic device 30 also comprises a portable phone card comprising a SIM module for phone transmission of data and signals via GSM mobile telephony or via cloud 60 to server 40.

In this alternative, the wearable portable electronic device 10 when in the outer space communicates with the server 40 by means of the fourth antenna 204 which uses a proprietary Sigfox® branded protocol and communicates with the sixth antenna 206 of the gateway electronic device 20. Coverage is ensured by a sixth antenna 206 mounted with at least one of the gateway 20 or master 30 electronic devices that uses the proprietary high-power Sigfox® branded protocol with a communication range of 10 km, which allows to cover a large area around the facility.

In this more simplified alternative, the LoRa protocol is used inside the facility, while the Sigfox® protocol is used in the outer space.

As an alternative to the use of the GSM module in the master gateway electronic device 30 of the previous alternative, it is possible to use the sixth alternative antenna 206 which uses a proprietary high-power Sigfox® branded protocol suitable for connecting to the Internet network as well.

More generally, the localization apparatus 100 of the present invention allows to calculate the spatial position of any portable electronic device 10 through a process carried out by the electronic components of the localization apparatus as specified below.

The localization apparatus 100 comprises at least the portable electronic device 10 adapted to be applied to an object or to a person, at least three gateway electronic devices 20, 30 arranged fixedly at an inner or an outer space, connected in communication between them and with said at least one portable electronic device 10, at least a server 40 comprising at least an electronic device comprising at least a processor 104 which processes data and comprises a module which measures time intervals between events, data or signals and at least a memory 105 which stores data at least for a period of time necessary to receive them or transmit them or process them by said at least a processor 104.

At least a gateway electronic device 20, 30 of said at least three gateway electronic devices 20, 30 is a master gateway electronic device 30 which is connected in communication with said at least a server 40.

Said at least a portable electronic device 10 comprises a microcontroller 101 that processes data and comprises a module that measures time intervals between events, data or signals, at least one first memory 102 of said at least a memory 102, 105, at least a portable supply battery 111 which electrically supplies electronic components mounted with said at least a portable electronic device 10.

Said at least a gateway electronic device 20, 30 comprises another microcontroller 101 that processes data and comprises a module which measures time intervals between events, data or signals, at least another memory 102 of said at least a memory 102, 105, at least another supply battery 112 which electrically supplies electronic components mounted with said at least a gateway electronic device 20, 30.

The spatial position of each of said at least three gateway electronic devices 20, 30 is stored in said at least a memory 105 of said server 40 and / or stored in said at least another memory 102 of at least one of said at least three gateway electronic devices 20, 30,

Said at least a processor 104 of said at least a server 40 calculates at least a distance between each of said at least three gateway electronic devices 20, 30 and said at least a portable electronic device 10 and calculates a spatial position of said at least a portable electronic device 10 using as calculation data the spatial position of each of said at least three gateway electronic devices 20, 30 and at least three distances between said at least a portable electronic device 10 and said at least three gateway electronic devices 20, 30.

Said at least a distance between each of said at least three gateway electronic devices 20, 30 and said at least a portable electronic device 10 is calculated by said at least a processor 104 of said at least a server 40 using as data a signal speed and a flight time which is a time interval comprised between sending a first signal by said at least a gateway electronic device 20, 30 towards said at least a portable electronic device 10 and receiving by said gateway electronic device 20, 30 a second signal sent by said at least a portable electronic device 10 towards said at least a gateway electronic device 20, 30 when said first signal is received by the portable electronic device 10.

Said microcontroller 101 of said at least one gateway electronic device 20, 30 measures said flight time.

Said at least a portable electronic device 10 comprises at least a low-power, omnidirectional, radio frequency transceiver antenna 201, 202, 204 adapted to communicate with at least one of said at least three gateway electronic devices 20, 30.

Said at least a portable electronic device 10 comprises at least a satellite antenna 203 which receives at least a satellite localization datum by at least one of global navigation satellite systems 50.

Said at least an antenna 201, 202, 204 mounted with said at least a portable electronic device 10 is a first antenna 201 of the ceramic chip type with 2.4 GHz frequency.

Said at least an antenna 201, 202, 204 mounted with said at least a portable electronic device 10 is a second antenna 202 with low-dissipated power and high transmission and receiving range which uses a LoRa communication protocol and/or it is a fourth antenna 204 with low-dissipated power and high transmission and receiving range which uses a proprietary communication protocol which communicates in industrial, scientific and medical frequency band and wherein said frequency band is an *Ultra Narrow band.*

Said at least a portable electronic device 10 comprises an acceleration sensor 401 which measures at least a datum of an acceleration undergone by said at least a portable electronic device 10 and communicates said at least an acceleration datum to said at least a memory 102, said microcontroller 101 reads said at least an acceleration datum by said at least a memory 102 and communicates said at least an acceleration datum to said at least a gateway electronic device 20, 30 which communicates said at least an acceleration datum to said at least a memory 105 of said server 40, wherein said at least a memory 105 comprises a datum of an acceleration threshold and a datum of a time period threshold, said at least a processor 104 of said server 40 verifies that the acceleration datum measured by said acceleration sensor 401 is above said acceleration threshold datum, if the acceleration datum measured is higher than said acceleration threshold datum, then said at least a processor 104 measures a stopping time period within which said at least a portable electronic device 10 remains stopped and if said stopping time period is higher than said time period threshold datum, then said at least a processor 104 communicates an event of an object or a person possibly falling.

Said gateway electronic device 20, 30 comprises at least an omnidirectional, wide receiving and transmission range J-pole antenna 205, 206 adapted to communicate data or signals with said at least a portable electronic device 10.

Said at least one antenna J-pole 205, 206 mounted with said gateway electronic device 20, 30 is a VHF frequency antenna 205 and/or it is a router antenna 206.

Said master gateway electronic device 30 comprises a portable phone card comprising a SIM module for phone transmission of data and signals via mobile telephony o via cloud 60 to said server 40.

Said portable supply battery 111 of said portable electric device 10 is a flat-shaped battery.

Said method is implemented in a software program actuated by the electronic components of the localization apparatus 100 of the present invention as described above. The software program is loaded into said at least one memory 105 of server 40. It is possible that parts of the software program are loaded into the memory 102 of the gateway electronic devices 20, 30.

With communications between portable 10 and gateway 20, 30 electronic devices, it is referred to wireless communications actuated by means of radio electromagnetic waves of the antennas 201-206 described above.

Advantageously, the localization apparatus 100 according to the present invention can also identify the floor of the building or facility where the portable electronic device 10 mounted on the inpatient is present.

Advantageously, once the spatial position of the portable electronic device 10 mounted on the back of the inpatient is known, if the inpatient gets lost, the localization apparatus 100 identifies him both inside the building or the facility and in the outer space. The electronic devices of the server 40 of the localization apparatus 100 communicate the spatial position of the lost or fallen inpatient so that workers or relatives can find the inpatient.

The gateway electronic devices 20, 30 also communicate to the server 40 other data such as for example the acceleration datum that arrives from the acceleration sensor 401 of the portable electronic device 10.

The signal communications between the portable 10 and fixed gateway 20, 30 electronic devices take place at time intervals that can be suitably preset both inside the memory 102 of the portable electronic device 10 and inside the memory 102 of the gateway electronic device 20 30 so that the microcontroller 101 can control the sending of signals and data in the wireless network of the localization apparatus 100.

The communication band of the antennas 201-206 is around 2.4 GHz, high in the ISM band. The radio band is divided into four LoRa channels, where a first channel is common to all communication networks between portable 10 and fixed gateway 20, 30 electronic devices and is a service for recording portable electronic devices 10 and fixed gateway electronic devices 20, 30. The other three channels of the four LoRa channels are used for data communications and position and acceleration signals. The four channels are spaced at least by 4MHz each so as not to disturb each other.

The localization apparatus 100 provides an algorithm for recording the positions of the gateway electronic devices 20, 30 between them and the communication to the memory 105 of the server 40 so that the positions of the gateway electronic devices 20, 30 can be recorded at least in this memory 105.

Alternatively, the position of the gateway devices 20, 30 can also be recorded in the memories 102 of the gateway electronic devices 20, 30.

It is possible to define a subnet of gateway devices 20, 30 so that only the portable electronic devices 10 present in the vicinity are registered in this subnet of the localization apparatus 100.

It is also possible to define an alarm system based on spatial perimeters previously established inside or outside buildings or facilities, so that if a portable electronic device 10 moves outside a permitted spatial perimeter workers or relatives are alerted for the recovery of the inpatient.

Advantageously, the localization apparatus 100 of the present invention allows to localize objects or people both inside a building, also localizing the floor of the building, and in an outer space, it is able to operate for a long period of time without the portable power batteries 111 getting discharged.

Advantageously, the portable electronic device 10 of the localization apparatus 100 permits to be applied over the back of an inpatient, having a low thickness and not having high-power electronic components, but only low-dissipation electronic components.

Advantageously, the localization apparatus 100 allows to establish whether an inpatient has fallen down on the ground and how long he is on the ground so as to be able to alert social healthcare workers or family members.

Alternatively, it is possible to provide that the portable supply battery 111 can be any battery when there is no need to apply the portable electronic device 10 on people, for example if the portable electronic device 10 is applied on containers or other objects arranged in a warehouse or in a building such as electromedical or medical instruments or wheelchairs or mobile beds placed inside a hospital or social healthcare facility.

The invention thus conceived is susceptible to many modifications and variants, all falling within the same inventive concept; furthermore, all details can be replaced by equivalent technical elements. In practice, the materials used, as well as the dimensions thereof, can be of any type according to the technical requirements.

## Claims

1. Localization apparatus (100) comprising
at least a portable electronic device (10) adapted to be applied to an object or to a person,
at least three gateway electronic devices (20, 30) arranged fixedly at an inner or an outer space, connected in communication between them and with said at least one portable electronic device (10),
at least a server (40) comprising at least an electronic device comprising at least a processor (104) which processes data and comprises a module which measures time intervals between events, data or signals and at least a memory (105) which stores data at least for a period of time necessary to receive them or transmit them or process them by said at least a processor (104),
wherein at least a gateway electronic device (20, 30) of said at least three gateway electronic devices (20, 30) is a master gateway electronic device (30) which is connected in communication with said at least a server (40),
wherein said at least a portable electronic device (10) comprises a microcontroller (101) that processes data and comprises a module that measures time intervals between events, data or signals, at least one first memory (102) of said at least a memory (102, 105), at least a portable supply battery (11) which electrically supplies electronic components mounted with said at least a portable electronic device (10),
wherein said at least a gateway electronic device (20, 30) comprises another microcontroller (101) that processes data and comprises a module which measures time intervals between events, data or signals, at least another memory (102) of said at least a memory (102, 105), at least another supply battery (112) which electrically supplies electronic components mounted with said at least a gateway electronic device (20, 30),
wherein a spatial position of each of said at least three gateway electronic devices (20, 30) is stored in said at least a memory (105) of said server (40) and/or stored in said at least another memory (102) of at least one of said at least three gateway electronic devices (20, 30),
wherein said at least a processor (104) of said at least a server (40) calculates at least a distance between each of said at least three gateway electronic devices (20, 30) and said at least a portable electronic device (10) and calculates a spatial position of said at least a portable electronic device (10) using as calculation data the spatial position of each of said at least three gateway electronic devices (20, 30) and at least three distances between said at least a portable electronic device (10) and said at least three gateway electronic devices (20, 30).

2. Localization apparatus (100) according to claim 1, **characterized in that** said at least a distance between each of said at least three gateway electronic devices (20, 30) and said at least a portable electronic device (10) is calculated by said at least a processor (104) of said at least a server (40) using as data a signal speed and a flight time which is a time interval comprised between sending a first signal by said at least a gateway electronic device (20, 30) towards said at least a portable electronic device (10) and receiving by said gateway electronic device (20, 30) a second signal sent by said at least a portable electronic device (10) towards said at least a gateway electronic device (20, 30) when said first signal is received by the portable electronic device (10).

3. Localization apparatus (100) according to any one of claims 1 or 2, **characterized in that** said at least a portable electronic device (10) comprises at least a low-power, omnidirectional, radio frequency transceiver antenna (201, 202, 204) adapted to communicate with at least one of said at least three gateway electronic devices (20, 30).

4. Localization apparatus (100) according to claim 3, **characterized in that** said at least a portable electronic device (10) comprises at least a satellite antenna (203) which receives at least a satellite localization datum by at least one of global navigation satellite systems (50).

5. Localization apparatus (100) according to any one of claims 3 or 4, **characterized in that** said at least an antenna (201, 202, 204) mounted with said at least a portable electronic device (10) is a first antenna (201) of ceramic chip type with 2.4 GHz frequency.

6. Localization apparatus (100) according to any one of claims 3-5, **characterized in that** said at least an antenna (201, 202, 204) mounted with said at least a portable electronic device (10) is a second antenna (202) with low-dissipated power and high transmission and receiving range which uses a LoRa communication protocol and/or it is a fourth antenna (204) with low-dissipated power and high transmission and receiving range which uses a proprietary communication protocol which communicates in industrial, scientific and medical frequency band and wherein said frequency band is an *Ultra Narrow Band.*

7. Localization apparatus (100) according to any one of claims 1-6, **characterized in that** said at least a portable electronic device (10) comprises an acceleration sensor (401) which measures at least a datum of an acceleration undergone by said at least a portable electronic device (10) and communicates said at least an acceleration datum to said at least a memory (102), said microcontroller (101) reads said at least an acceleration datum by said at least a memory (102) and communicates said at least an acceleration datum to said at least a gateway electronic device (20, 30) which communicates said at least an acceleration datum to said at least a memory (105) of said server (40), wherein said at least a memory (105) comprises a datum of an acceleration threshold and a datum of a time period threshold, said at least a processor (104) of said server (40) verifies that the acceleration datum measured by said acceleration sensor (401) is above said acceleration threshold datum, if the acceleration datum measured is higher than said acceleration threshold datum, then said at least a processor (104) measures a stopping time period within which said at least a portable electronic device (10) remains stopped and if said stopping time period is higher than said time period threshold datum, then said at least a processor (104) communicates an event of an object or a person possibly falling.

8. Localization apparatus (100) according to any one of claims 1-7, **characterized in that** said gateway electronic device (20, 30) comprises at least an omnidirectional, wide receiving and transmission range J-pole antenna (205, 206) adapted to communicate data or signals with said at least a portable electronic device (10) .

9. Localization apparatus (100) according to claim 8, **characterized in that** said at least a J-pole antenna (205, 206) mounted with said gateway electronic device (20, 30) is a VHF frequency antenna (205) and/or it is a router antenna (206) .

10. Localization apparatus (100) according to any one of claims 1 -9, **characterized in that** said master gateway electronic device (30) comprises a portable phone card comprising a SIM module for phone transmission of data and signals via mobile telephony o via cloud (60) to said server (40) .

11. Localization apparatus (100) according to any one of claims 1-10, **characterized in that** said portable supply battery (111) of said portable electronic device (10) is a flat-shaped battery.
